# EUROPEAN PATENT APPLICATION

(11) **EP 4 830 819 A1**
(43) Date of publication of application: **28.10.2026**
(21) Application number: 24907818.9
(22) Date of filing: 21.11.2024
(51) Int. Cl.: B01D 61/46, B01D 61/44, B01D 61/52, B01D 61/54, C01D 1/38, C01D 15/02

(54) **ELECTRODIALYSIS DEVICE AND ELECTRODIALYSIS PROCESS**

(30) Priority: 18.12.2023 KR 20230184956
(71) Applicant: POSCO Holdings Inc., Pohang-si, Gyeongsangbuk-do 37859 (KR)
(72) Inventor: KIM, Kyunghoon, Pohang-si, Gyeongsangbuk-do 37859 (KR); CHOI, Jaehyug, Pohang-si, Gyeongsangbuk-do 37859 (KR); LEE, Sihwa, Pohang-si, Gyeongsangbuk-do 37859 (KR); WI, Jin Yeop, Pohang-si, Gyeongsangbuk-do 37859 (KR); KIM, Dong Soo, Pohang-si, Gyeongsangbuk-do 37859 (KR); SEO, Bae Mun, Pohang-si, Gyeongsangbuk-do 37859 (KR)
(74) Representative: Pfenning, Meinig & Partner mbB
(86) International application number: PCT/KR2024/018446
(87) International publication number: WO 2025/135533

(57) **Abstract**

The present disclosure relates to an electrodialysis device and an electrodialysis process. The electrodialysis device may include an acid room that includes at least one pair of bipolar membranes disposed adjacent to each of the negative electrode and positive electrode, and a cation dialysis membrane and an anion dialysis membrane alternately disposed therein, is disposed between the bipolar membrane and the anion dialysis membrane, and receives an acid room solution from an acid tank; a salt solution room that is disposed between the anion dialysis membrane and the cation dialysis membrane and receives a salt solution from a salt tank; a base room that is disposed between the cation dialysis membrane and the bipolar membrane and receives a base room reaction solution from a base tank; and a pump member that is disposed to be connected to the acid tank and the salt tank.

## Description

### [Technical Field]

The present disclosure relates to manufacturing lithium hydroxide, and to an electrodialysis device and an electrodialysis process.

### [Background Art]

Recently, with the rapid growth of the IT and electric vehicle markets, the demand for lithium, which is a key raw material for secondary batteries, has increased significantly. The lithium market for secondary batteries is highly concentrated in Korea, China, and Japan, but Korea is entirely dependent on imports, so a stable supply method is needed. Accordingly, as a study on the production of lithium, the development of lithium extraction technology from ore and brine is being conducted. In Korea, a demo plant for producing lithium carbonate and lithium hydroxide from ore is in operation. Several companies in South America, China, etc., are producing large quantities of lithium, and research on lithium production is also being conducted in Korea.

The existing lithium production process being conducted in Korea extracts lithium from ore in the form of a lithium sulfate aqueous solution and produces a lithium hydroxide aqueous solution using electrodialysis. The produced lithium hydroxide aqueous solution is crystallized to produce lithium hydroxide monohydrate (LiOH-H₂O). The electrodialysis process is a key process for converting a lithium sulfate solution into a lithium hydroxide solution, and needs to be operated in a stable and efficient method.

### [Disclosure]

### [Technical Problem]

The present disclosure attempts to provide an electrodialysis device capable of maintaining pH of salt introduced for operation in a stable and efficient method.

The present disclosure attempts to provide an electrodialysis process capable of maintaining pH of salt introduced for operation in a stable and efficient method.

### [Technical Solution]

According to an exemplary embodiment, an electrodialysis device includes: an acid room that includes at least one pair of bipolar membranes disposed adjacent to each of the negative electrode and positive electrode, and a cation dialysis membrane and an anion dialysis membrane alternately disposed therein, is disposed between the bipolar membrane and the anion dialysis membrane, and receives an acid room reaction solution from an acid tank; a salt solution room that is disposed between the anion dialysis membrane and the cation dialysis membrane and receives a salt solution from a salt tank; a base room that is disposed between the cation dialysis membrane and the bipolar membrane and receives a base room reaction solution from a base tank; and a pump member that is disposed to be connected to the acid tank and the salt tank.

The pump member may supply an acidic solution within the acid tank to the salt solution room. The pump member may be disposed to connect a solution supply unit disposed above the acid tank and a solution inlet unit disposed above the salt solution tank.

The electrodialysis device may further include a driving unit that operates the pump member. The driving unit may include a control unit that controls the operation of the pump member according to a pH of the salt solution room.

When the pH of the salt solution room is 3.0 or higher, the control unit may drive the pump member to supply an acidic solution from the acid tank to the salt tank. When the pH of the salt solution room is 1.5 or lower, the control unit may stop the operation of the pump member to prevent the acidic solution from being supplied from the acid tank to the salt solution room. A plurality of unit pairs may be continuously disposed.

According to another exemplary embodiment, an electrodialysis process being a bipolar electrodialysis process for separating lithium ions by electrodialyzing a lithium ion-containing solution in an electrodialysis device including an acid room that includes at least one pair of bipolar membranes disposed adjacent to each of a negative electrode and positive electrode, and a cation dialysis membrane and an anion dialysis membranes alternately disposed therein, is disposed between a bipolar membrane and an anion dialysis membrane, a salt solution room that is disposed between the anion dialysis membrane and the cation dialysis membrane, and a base room that is disposed between the cation dialysis membrane and the bipolar membrane includes supplying an acidic solution from the acid room to the salt solution room.

In the supplying of the acidic solution of the acid room to the salt solution room, the acidic solution may be supplied from the acid tank that supplies the acid room reaction solution to the acid room. In the supplying of the acidic solution of the acid room to the salt solution room, the acidic solution of the acid room may be supplied to the salt solution room when the pH of the salt solution room is 3 or higher.

In the supplying of the acidic solution of the acid room to the salt solution room, the acidic solution may not be supplied to the salt solution room when the pH of the salt solution room is 1.5 or lower. In the supplying of the acidic solution of the acid room to the salt solution room, the acid solution may be an acid solution circulated in the acid room.

### [Advantageous Effects]

According to an exemplary embodiment of the present disclosure, the electrodialysis device includes the pump member disposed to connect the acid room and the salt solution room, thereby efficiently maintaining the pH of salt introduced for operation in the stable and efficient method.

According to another exemplary embodiment of the present disclosure, the electrodialysis process includes a step of supplying the acidic solution of the acid room to the salt solution room, thereby efficiently maintaining the pH of salt introduced for operation in the stable and efficient method.

### [Description of the Drawings]

FIG. 1 illustrates an electrodialysis device according to an exemplary embodiment of the present disclosure.
FIG. 2 is a simplified diagram of an inside of a stack according to an exemplary embodiment of the present disclosure.
FIG. 3 is a diagram illustrating changes in pH and current of salt as an acid dosing pump operates.
FIG. 4 is a diagram illustrating the amount of changes in pH over time in a salt tank of a demo plant.
FIGS. 5 and 6 are diagrams illustrating the amount of change in pH over time after the acid dosing pump is installed.

### [Mode for Invention]

The terms first, second, third, and the like are used to describe, but are not limited to, various parts, components, areas, layers and/or sections. These terms are used only to distinguish a part, component, region, layer, or section from other parts, components, regions, layers, or sections. Accordingly, a first part, a component, an area, a layer, or a section described below may be referred to as a second part, a component, a region, a layer, or a section without departing from the scope of the present disclosure.

Terminologies used herein are to mention only a specific Example, and do not to limit the present disclosure. Singular forms used herein include plural forms as long as phrases do not clearly indicate an opposite meaning. The meaning "including" used in the present specification concretely indicates specific properties, regions, integer numbers, steps, operations, elements, and/or components, and is not to exclude presence or addition of other specific properties, regions, integer numbers, steps, operations, elements and/or components thereof.

When a part is referred to as being "above" or "on" other parts, it may be directly above or on other parts, or other parts may be included in between. In contrast, when a part is referred to as being "directly above" another part, no other part is involved in between.

In addition, % in the present specification refers to wt% unless otherwise specified.

All terms including technical terms and scientific terms used herein have the same meaning as the meaning generally understood by those skilled in the art to which the present disclosure pertains unless defined otherwise. Terms defined in a generally used dictionary are additionally interpreted as having the meaning matched to the related art document and the currently disclosed contents and are not interpreted as ideal or formal meaning unless defined.

Hereinafter, embodiments of the present disclosure will be described in detail. However, examples are provided by way of example, and the present disclosure is not limited by examples, but is defined by only the scope of claims to be described below.

According to an exemplary embodiment of the present disclosure, an electrodialysis device may include a unit pair repeatedly stacked and positioned between a positive electrode and a negative electrode connected to a rectifier. The unit pair may have a configuration in which a bipolar membrane, an anion dialysis membrane, and a cation dialysis membrane are sequentially positioned. More specifically, the unit pair may have a configuration in which a bipolar membrane, a spacer gasket, an anion dialysis membrane, a spacer gasket, a cation dialysis membrane, and a spacer gasket are sequentially positioned.

The unit pairs of the configuration may be positioned sequentially adjacent to each other. Among two adjacent unit pairs, the spacer gasket positioned at a rear end of the cation dialysis membrane of the unit pair positioned at the front may be positioned adjacent to the bipolar membrane of the unit pair positioned adjacent to the rear end.

In an exemplary embodiment, the electrodialysis device may include an acid room that includes at least one pair of bipolar membranes disposed adjacent to each of the negative electrode and positive electrode, and a cation dialysis membrane and an anion dialysis membrane alternately disposed therein, is disposed between the bipolar membrane and the anion dialysis membrane, and receives an acid room reaction solution from an acid tank, a salt solution room that is disposed between the anion dialysis membrane and the cation dialysis membrane and receives a salt solution from a salt tank, and a base room that is disposed between the cation dialysis membrane and the bipolar membrane and receives a base room reaction solution from a base tank.

Specifically, a lithium salt aqueous solution is injected into the salt solution room, an acid room solution is injected into the acid room, and a base room solution is injected into the base room to perform bipolar electrodialysis.

In this case, when a voltage is applied to a bipolar electrodialysis device to cause a current to flow, an acid solution is formed in the acid room, a lithium hydroxide aqueous solution is formed in the base room, and a desalted solution containing residual lithium salt that does not move through the membrane in the injected lithium salt aqueous solution may be formed in the salt solution room.

Specifically, the process of forming the acid solution and the lithium hydroxide aqueous solution is as follows.

First, the acid room reaction solution injected into the acid room is hydrolyzed on a surface of the bipolar membrane of the acid room, and decomposed into hydrogen ions and hydroxide ions. In this case, the decomposed hydroxide ions move to the positive electrode cell, and the decomposed hydrogen ions move between the bipolar membrane and the anion dialysis membrane. Meanwhile, the anion of the lithium salt aqueous solution injected between the anion dialysis membrane and the cation dialysis membrane passes through the anion dialysis membrane and moves between the bipolar membrane and the anion dialysis membrane. Then, the hydrogen ion and the anion are concentrated between a first bipolar membrane and the anion dialysis membrane to form an acid solution.

Thereafter, the process of forming the lithium hydroxide aqueous solution is as follows. The base room reaction solution injected into the base room is hydrolyzed in a water decomposition catalyst layer of the bipolar membrane of the base room and decomposed into the hydrogen ions and hydroxide ions. In this case, the decomposed hydrogen ions move to the negative electrode cell, and the decomposed hydroxide ions move between the cation dialysis membrane and the bipolar membrane. Meanwhile, the lithium ions of the lithium salt aqueous solution injected between the anion dialysis membrane and the cation dialysis membrane pass through the cation dialysis membrane and move to the base room into which they are injected. Then, the hydroxide ions and the lithium ions are concentrated in the base room to form the lithium hydroxide aqueous solution.

More specifically, an acid group meets the hydrogen hydrolyzed in the bipolar membrane on the positive electrode cell side and is converted into an acid, and the lithium ion moving to the negative electrode through the cation dialysis membrane meets a hydroxyl group (OH-) generated in the bipolar membrane and is converted into the lithium hydroxide (LiOH) aqueous solution.

According to an exemplary embodiment, the overall reaction formula may be as follows.

Li₂SO₄ (aq) ⇔ 2Li⁺(base room) + SO₄²⁻(acid room)

H₂O ⇔ H⁺(acid room) + OH⁻(base room)

Li₂SO₄(aq)+ 2H₂O ⇔ 2LiOH(aq, base room) + H₂SO₄ (aq, acid room)

In this case, a high-concentration lithium salt aqueous solution injected into the base room may be decomposed into lithium ions and acid groups to be discharged, and a low-concentration lithium salt aqueous solution that partially remains may be generated and discharged to the outside of the electric dialysis device.

In an exemplary embodiment, the lithium salt may be, for example, sulfate (Li₂SO₄), and the acid may be sulfuric acid (H₂SO₄). Meanwhile, the acid room discharge solution may be a low-concentration acid or water such as deionized water, and the base room discharge solution may be a low-concentration lithium hydroxide aqueous solution or water such as deionized water.

The lithium salt solution formed in the above-mentioned base room may be injected into the unit pair positioned adjacent to the rear end to perform the same electrodialysis as the previous unit pair. In this way, the electrodialysis device according to an exemplary embodiment may be operated by having a plurality of unit pairs disposed continuously.

In an exemplary embodiment, the lithium hydroxide-containing base solution formed and discharged from the base room of the electrodialysis device flows into the base tank, the acidic solution formed and discharged from the acid room flows into the acid tank, and the desalted solution formed and discharged from the salt solution room flows into the salt tank. In this way, the acid tank, the salt tank, and the base tank may be members through which the solutions injected and discharged into and from the acid room, the salt solution room, and the base room, and the discharged solutions are circulated, respectively.

In an exemplary embodiment, partitions are installed in the acid tank, the salt solution tank, and the base tank, so that some of the solutions flowing into each tank are discharged to the outside, and the remainder may be mixed with water or a salt solution, such as the deionized water, which is additionally introduced separately, and circulated and supplied to the electrodialysis device.

In an exemplary embodiment, the electrodialysis device may include a pump member connected to the acid tank and the base tank. The pump member may be a member that supplies the acidic solution of the acid room to the salt solution room. Specifically, the pump member supplies the acidic solution provided to the acid tank from the acid room to the salt solution tank, and the acidic solution may be supplied to the salt solution room from the salt solution tank.

Specifically, the salt solution passes through the cation membrane and the anion membrane into Li+ ions and SO₄²- ions, respectively. In the bipolar membrane, water is decomposed into H⁺ and OH+ ions, which move to the positive electrode and the negative electrode, respectively. In this case, the pH of the salt solution injected may be maintained in balance by the amount of H⁺ and OH⁻ ions that diffuse and pass through the acid room and the base room, respectively.

In this case, the direction of the cation or anion movement may change depending on the state of the membranes. In an exemplary embodiment, when a pinhole is formed in the membrane, a physical flow of solution occurs through the pinhole, and accordingly, there is a problem that the pH of the salt solution room is not maintained at a constant level.

According to an exemplary embodiment of the present disclosure, the pH of the salt solution may be maintained at 2 to 3.0, specifically, 2 to 2.5. Specifically, since the pH of the salt solution is maintained at 2 to 2.5, the current applied to the membrane is prevented from changing when there is a change in pH, thereby having the advantage of being able to stabilize the process operation, prevent the performance of the ion exchange membrane from deteriorating, and stably operate in the upper process when the desalted solution is recycled.

In an exemplary embodiment, the pH of the salt solution may be maintained by the pump member. Specifically, the pump member may control the pH of the salt solution in the salt solution room to be uniformly maintained by supplying the acidic solution in the acid tank to the salt solution room.

In an exemplary embodiment, the pump member may be disposed to connect the solution supply unit disposed above the acid tank and the solution inlet unit disposed above the salt solution tank. Since the pump member is disposed above the acid tank and the salt solution tank, there is an advantage in that the accurate amount of acidic solution may be supplied to the salt solution tank.

In an exemplary embodiment, the electrodialysis device may include a driving unit that operates the pump member. The driving unit may be electrically connected to the pump member and control the operation of the pump member. For example, when an opening/closing structure is disposed in the pump member, the driving unit may assist in opening and closing the opening/closing structure.

In an exemplary embodiment, the driving unit may include a control unit that controls the operation of the pump member according to the pH of the salt solution room. Specifically, the pump member is a member for maintaining the pH of the salt solution room at 2 to 3, and when the pH of the salt solution room is 3 or higher, it may be controlled to supply an acidic solution from the acid tank in order to lower the pH of the salt solution in the salt solution room. Specifically, when the pH of the salt solution room is 3 or higher, the pump member may transfer the acidic solution of the acid tank to the salt solution tank so that the pH of the salt solution room is controlled to be lower than 3.

In an exemplary embodiment, the control unit may control the operation of the pump member to stop the supply of the acidic solution from the acid tank to the salt solution room when the pH of the salt solution room is 1.5 or lower. In this way, the control unit may continuously control the pH of the salt solution room to be maintained in a predetermined range, for example, a range of 2 to 3.

In an exemplary embodiment, the pump member may further include a sensor unit for measuring the pH of the salt solution near the salt solution tank. The sensor unit may be disposed near the salt solution tank, more specifically, near the solution inlet unit, in the pump member to measure the pH of the salt solution circulating in the salt solution tank. Specifically, the sensor unit may measure the pH of the salt solution, and when the pH of the salt solution is 3 or higher, the pump member may be operated, and when the pH of the salt solution is 2 or lower, the pump member may be stopped.

In another exemplary embodiment of the present disclosure, in the electrodialysis device including the acid room that includes at least one pair of bipolar membranes disposed adjacent to each of the negative electrode and positive electrode, and the cation dialysis membrane and the anion dialysis membranes alternately disposed therein, is disposed between the bipolar membrane and the anion dialysis membrane, the salt solution room that is disposed between the anion dialysis membrane and the cation dialysis membrane, and the base room that is disposed between the cation dialysis membrane and the bipolar membrane, the bipolar electrodialysis process is a bipolar electrodialysis process for separating lithium ions by electrodialyzing the lithium ion-containing solution, and may include a step of supplying an acidic solution from the acid room to the salt solution room.

In an exemplary embodiment, in the step of supplying the acidic solution of the acid room to the salt solution room, the acidic solution may be supplied from the acid tank that supplies the acid room reaction solution to the acid room. Specifically, the acidic solution of the acid room may be supplied from the acid tank to the salt solution tank, and may be supplied from the salt solution tank to the salt solution room.

In an exemplary embodiment, the step of supplying the acidic solution of the acid room to the salt solution room may be to supply the acidic solution of the acid room to the salt solution room when the pH of the salt solution room is 3 or higher. In an exemplary embodiment, the step of supplying the acidic solution of the acid room to the salt solution room may not supply the acidic solution to the salt solution room when the pH of the salt solution room is 1.5 or lower. In this way, the acidic solution may be uniformly maintained in a predetermined range in order to control the concentration of the salt solution room when the pH of the salt solution room is high.

In an exemplary embodiment, the acidic solution may be an acidic solution circulated in the acid room. Specifically, the acidic solution may be supplied to the salt solution room by the pump member connected to the acid tank and the salt solution tank, and the description thereof is the same as that described above, to the extent that it does not contradict the above.

In order to describe the present disclosure in more detail, an exemplary embodiment of the present disclosure will be described. The following embodiment is only an embodiment of the present disclosure, and the present disclosure is not limited to the following embodiment.

### <Experimental Example>

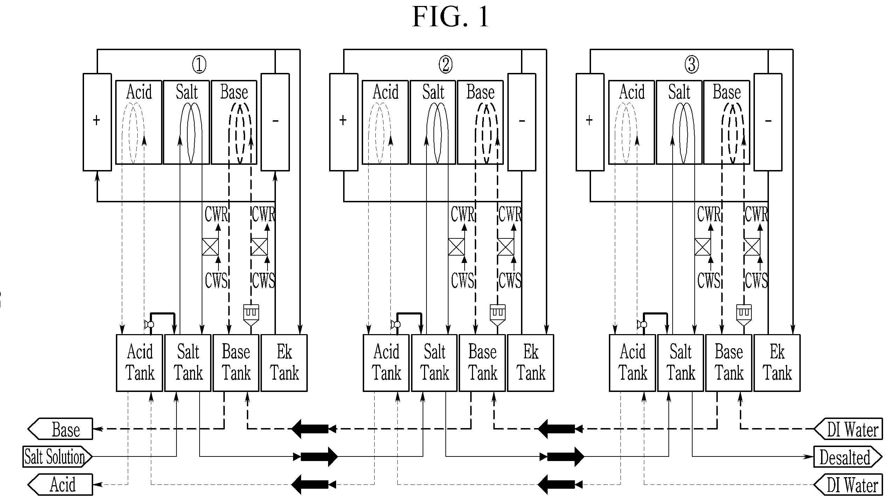

FIG. 1 illustrates an electrodialysis device according to an exemplary embodiment of the present disclosure.

Referring to FIG. 1, the electrodialysis device of the present disclosure injects a salt solution into a pump member (salt tank) connected to press No. 1. DI water is supplied from press No. 3 as a counter-current to the base room (base tank) and the acid room (acid tank). The injected solution is circulated to an upper stack, and ions move through an ion exchange membrane within the stack.

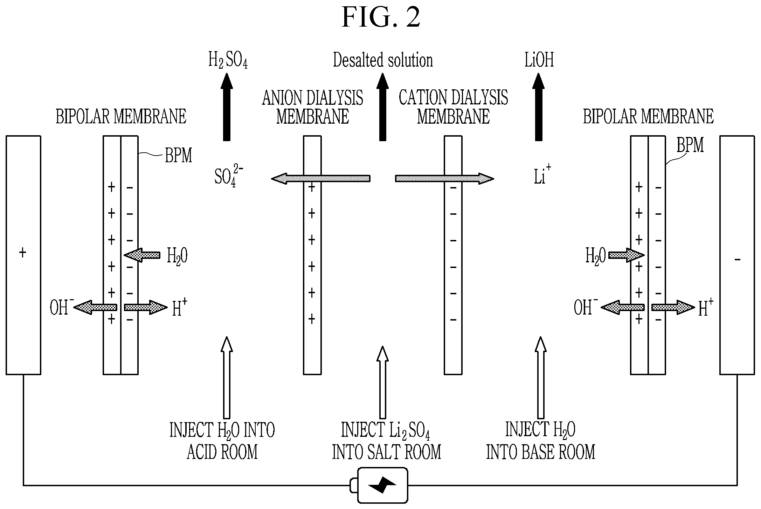

FIG. 2 is a simplified diagram of an inside of the stack according to an exemplary embodiment of the present disclosure.

Referring to FIG. 2, the salt solution enters the stack, and Li+ ions and SO₄²- ions pass through the cation membrane and the anion membrane. In the bipolar membrane, water is decomposed into H⁺ and OH+ ions, which move to the positive electrode and the negative electrode, respectively. LiOH is generated in the base room, and a sulfuric acid aqueous solution is generated in the acid room.

In this case, the pH of the salt introduced into the electrodialysis process in the conventional lithium process is controlled by balancing the amount of H⁺ and OH⁻ diffused by adjusting the concentration of the base and acid. This is done by controlling the concentration of the base and acid in the process by adjusting the amount of the base DI water (DIW) and the acid DI water (DIW) injected. In this case, when the process is in a normal state, the pH control is easy, but when a pinhole occurs in the cation membrane or a hole occurs due to burning, the control is impossible.

In contrast, the present disclosure supplies the acid solution to the salt solution room by connecting the acid room and the salt solution room and disposing the pump member.

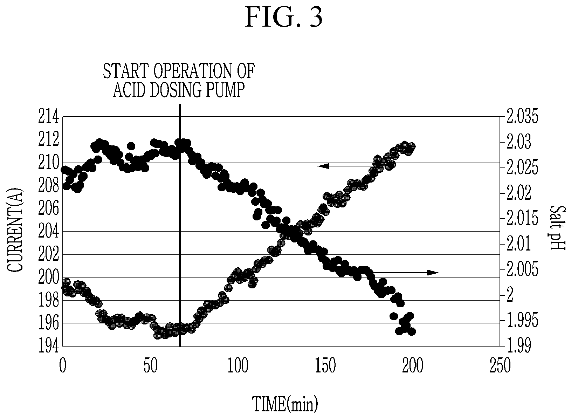

FIG. 3 is a diagram illustrating changes in pH and current of salt as an acid dosing pump operates.

Referring to FIG. 3, as the acid dosing pump, specifically, the pump member of the present disclosure operates, it may be confirmed that the current decreases over time and the pH of the salt increases over time.

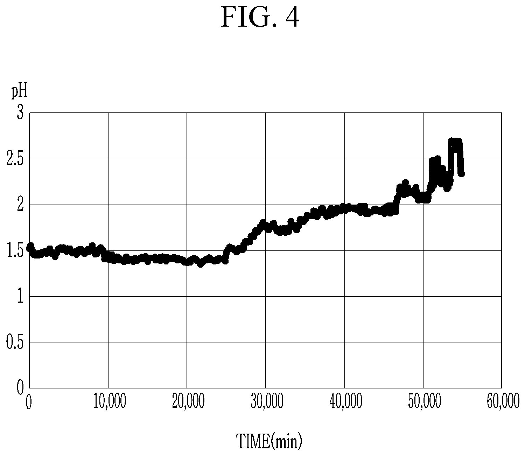

FIG. 4 is a diagram illustrating the amount of changes in pH over time in a salt tank of a demo plant.

FIG. 4 illustrates the amount of pH over time in the electrodialysis device that does not include the pump member of the present disclosure. Specifically, FIG. 4 is PDS data for the pH of the salt tank of the conventional demo plant. More specifically, the data of FIG. 4 is a value automatically measured every minute and represents data for 40 days.

When the conventional demo plant is operated, specifically, when the anion membrane of Astom Co., is applied, it may be confirmed that the pH is maintained at a constant level of 1.5. However, it may be confirmed that the increase in pH is not controlled from about 25,000 minutes. This may be confirmed that, as the electrodialysis device is performed for a long time, certain problems, such as the pinholes in the cation membrane or the holes due to burning, occur, making it difficult to control the pH.

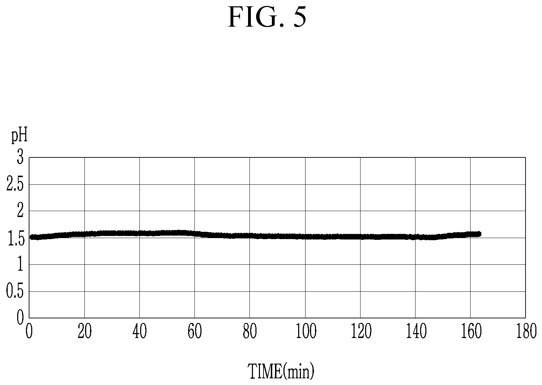

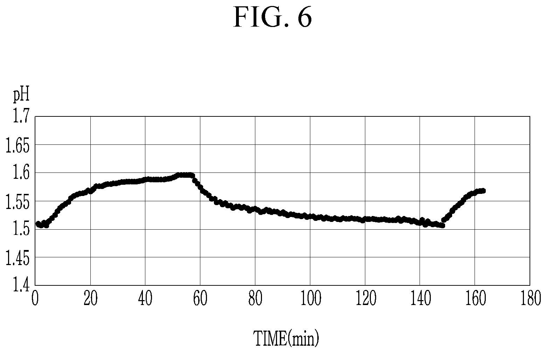

FIGS. 5 and 6 illustrate the amount of change in pH over time over time of the electrodialysis device in which the pump member is installed.

FIG. 5 illustrates the amount of change in pH of salt over time of the electrodialysis device of the present disclosure in which the pump member is installed. Referring to FIG. 5, unlike the conventional demo plant of FIG. 4, it may be confirmed that the pH is maintained at about 1.5.

FIG. 6 illustrates that a y-axis scale of FIG. 5 is controlled. Specifically, in the case where the pump member starts operating at pH 1.6 and stops operating at pH 1.5, a sawtooth-shaped graph was confirmed between 1.5 and 1.6 of pH when the process was operated after setting. Through this, it was confirmed that there is an advantage in that the automation of the process for maintaining the salt pH is also possible.

In this way, the electrodialysis device of the present disclosure includes the pump member that supplies the acidic solution from the acid room to the salt solution room, and since the pH of the salt solution room is controlled by the pump member, the pH of the salt may be maintained at a constant level without adding a separate raw material or adding a separate process. In addition, there is an advantage in that the pH of the salt may be maintained uniformly even if the electrodialysis process is performed for a long time and cracks occur in the cation membrane.

The present disclosure is not limited to the exemplary embodiments, but may be manufactured in a variety of different forms, and the present disclosure may be manufactured in a variety of different forms, and those of ordinary skill in the art to which the present disclosure pertains will understand that the present disclosure may be implemented in other specific forms without changing the technical spirit or essential features of the present disclosure. Therefore, it is to be understood that the exemplary embodiments described above are illustrative rather than being restrictive in all aspects.

## Claims

1. An electrodialysis device, comprising:
an acid room that includes at least one pair of bipolar membranes disposed adjacent to each of the negative electrode and positive electrode, and a cation dialysis membrane and an anion dialysis membrane alternately disposed therein,
is disposed between the bipolar membrane and the anion dialysis membrane, and receives an acid room solution from an acid tank;
a salt solution room that is disposed between the anion dialysis membrane and the cation dialysis membrane and receives a salt solution from a salt tank;
a base room that is disposed between the cation dialysis membrane and the bipolar membrane and receives a base room reaction solution from a base tank; and
a pump member that is disposed to be connected to the acid tank and the salt tank.

2. The electrodialysis device of claim 1, wherein:
the pump member supplies an acidic solution within the acid tank to the salt solution room.

3. The electrodialysis device of claim 1, wherein:
the pump member is disposed to connect a solution supply unit disposed above the acid tank and a solution inlet unit disposed above the salt solution tank.

4. The electrodialysis device of claim 1, further comprising:
a driving unit that operates the pump member.

5. The electrodialysis device of claim 4, wherein:
the driving unit includes a control unit that controls the operation of the pump member according to a pH of the salt solution room.

6. The electrodialysis device of claim 5, wherein:
when the pH of the salt solution room is 3.0 or higher, the control unit
drives the pump member to supply an acidic solution from the acid tank to the salt tank.

7. The electrodialysis device of claim 6, wherein:
when the pH of the salt solution room is 1.5 or lower, the control unit
stops the operation of the pump member to prevent the acidic solution from being supplied from the acid tank to the salt solution room.

8. The electrodialysis device of claim 1, wherein:
a plurality of unit pairs are continuously disposed.

9. An electrodialysis process being
a bipolar electrodialysis process for separating lithium ions by electrodialyzing a lithium ion-containing solution in an electrodialysis device including an acid room that includes at least one pair of bipolar membranes disposed adjacent to each of a negative electrode and positive electrode, and a cation dialysis membrane and an anion dialysis membranes alternately disposed therein, is disposed between a bipolar membrane and an anion dialysis membrane, a salt solution room that is disposed between the anion dialysis membrane and the cation dialysis membrane, and a base room that is disposed between the cation dialysis membrane and the bipolar membrane, the electrodialysis process comprising:
supplying an acidic solution from the acid room to the salt solution room.

10. The electrodialysis process of claim 8, wherein:
in the supplying of the acidic solution of the acid room to the salt solution room, the acidic solution is supplied from the acid tank that supplies the acid room reaction solution to the acid room.

11. The electrodialysis process of claim 8, wherein:
in the supplying of the acidic solution of the acid room to the salt solution room, the acidic solution of the acid room is supplied to the salt solution room when the pH of the salt solution room is 3 or higher.

12. The electrodialysis process of claim 8, wherein:
in the supplying of the acidic solution of the acid room to the salt solution room, the acidic solution is not supplied to the salt solution room when the pH of the salt solution room is 1.5 or lower.

13. The electrodialysis process of claim 8, wherein:
in the supplying of the acidic solution of the acid room to the salt solution room,
the acid solution is an acid solution circulated in the acid room.
